# EUROPEAN PATENT SPECIFICATION

(11) **EP 0 385 404 B1**
(45) Date of publication and mention of the grant of the patent: **19.06.1996**
(21) Application number: 90103812.5
(22) Date of filing: 27.02.1990
(51) Int. Cl.: G06F 11/0, G06F 11/00, G06F 1/04, G06F 1/10

(54) **Clock failure recovery system**
Taktausfallbeseitigungssystem
Système de rétablissement de défaillance d'horloge

(30) Priority: 28.02.1989 JP 47540/89
(43) Date of publication of application: 05.09.1990
(73) Proprietor: NEC CORPORATION, Tokyo (JP)
(72) Inventor: Nakamura, Akihiko, c/o NEC Koufu, Ltd., Koufu-shi, Yamanashi (JP)
(74) Representative: VOSSIUS & PARTNER

(56) References cited:
- DE-A- 3 335 549
- US-A- 4 651 277
- IBM TECHNICAL DISCLOSURE BULLETIN. 12 May 1987, NEW YORK US pages 5559 - 5560;'Circuit for detection of the failure of one of two clocks'

## Description

The present invention relates to a failure recovery system in an information processing system and, more particularly, to a clock failure recovery system.

Conventionally, a clock failure in an information processing system is detected not as a clock failure but as a failure in a logic portion caused by the clock failure. Therefore, when a clock failure occurs, failure recovery processing for a failure of a logic portion, which occurs under the influence of a clock failure, is executed.

In the conventional clock failure recovery system described above, a clock failure is detected as a failure of a logic portion caused thereby, and the same failure recovery processing as that for a failure of the logic portion is executed. Therefore, it is difficult to discriminate whether a clock failure or a failure of a logic portion occurs. Especially, when an intermittent clock failure as a most popular clock failure occurs, there is no reproducibility, and it is very difficult to analyze a factor of the failure.

In recent years, supercomputers and versatile large computers increasingly have larger scales, and the number of hardware components constituting a clock circuit is increased accordingly. Therefore, a frequency of clock failure is increased, and a strong demand has arisen for clock failure recovery.

US-A-4 651 277 discloses a control system for a magnetic disk drive unit with a clock detecting circuit. If no clock signal is supplied the clock switching circuit supplies a system clock signal to the disk controller instead of the clock signal from the magnetic disk drive.

It is therefore an object of the present invention to provide a clock failure recovery system which can discriminate a clock failure from a logic portion failure and which can shorten a time required for analyzing a failure factor. This object is solved with the features of the claim.

There is disclosed a clock failure recovery system in an information processing system including a plurality of processors and a diagnosis processor which can independently execute failure recovery for the plurality of processors, comprising: a clock distributor for generating one or a plurality of clock signals used in the information processing system and distributing the clock signals to the processors; clock failure detectors for monitoring the clock signal output from the clock distributor and for, when an error occurs, generating an error signal in units of corresponding processors; and interrupt generating means, having error signal holding means for holding the error signal, for interrupting the diagnosis processor in response to the error signal, wherein execution start of a failure recovery program for recognizing a processor in which a clock failure occurs and executing logging of a clock failure event and a clock failure state is controlled in an interrupt processing program of the diagnosis processor, which is started upon interrupt.
Fig. 1 is a block diagram showing an information processing system to which an embodiment of a clock failure recovery system according to the present invention is applied;
Figs. 2 to 4 are flow charts showing failure recovery programs; and
Fig. 5 is an actual flow chart for executing the programs shown in Figs. 2 to 4.

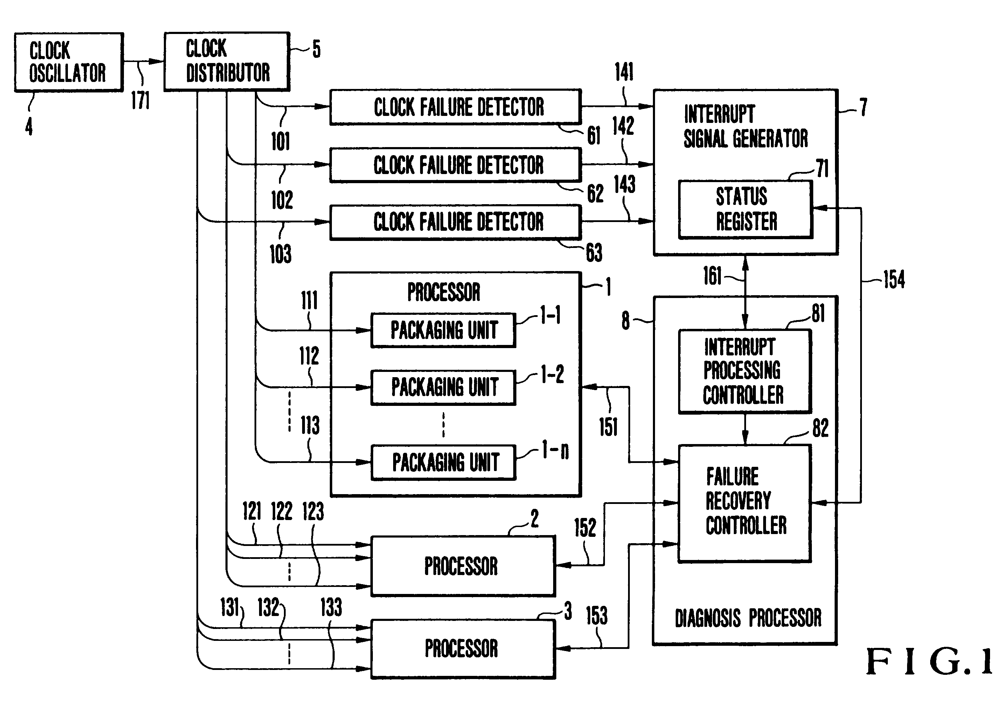

Fig. 1 shows an information processing system to which an embodiment of a clock failure recovery system of the present invention is applied. The information processing system comprises processors 1 to 3, a clock oscillator 4, a clock distributor 5, clock failure detectors 61 to 63, an interrupt signal generator 7 as an interrupt generating means, a diagnosis processor 8, clock signal lines 101 to 103, 111 to 113, 121 to 123, 131 to 133, and 171, and signal lines 141 to 143, 151 to 154, and 161.

The processor 1 is constituted by a plurality of packaging units 1-1 to 1-n. Each of the processors 2 and 3 is similarly constituted by a plurality of packaging units as in the processor 1. The clock oscillator 4 supplies a clock signal to the clock distributor 5 through the clock signal line 171. The clock distributor 5 independently distributes the clock signal through the clock signal lines 111 to 113, 121 to 123, and 131 to 133 in units of packaging units of the processors 1 to 3.

The clock failure detectors 61 to 63 monitor the clock signals supplied from the clock distributor 5 to the packaging units of the processors 1 to 3 through the clock signal lines 101 to 103. When the detectors 61 to 63 detect an error, they inform it to the interrupt signal generator 7 through the signal lines 141 to 143.

When the interrupt signal generator 7 is informed of an error from the clock failure detectors 61 to 63, it generates an interrupt signal, and outputs it to the diagnosis processor 8 through the signal line 161. The interrupt signal generator 7 has a status register 71 serving as an error signal holding means. The status register 71 holds data indicating a clock distribution system in which a failure occurs.

The diagnosis processor 8 diagnoses the processors 1 to 3, and comprises an interrupt processing controller 81 and a failure recovery controller 82. The interrupt processing controller 81 recognizes that a clock error interrupt occurs when the interrupt signal input through the signal line 161 goes active, and informs it to the failure recovery controller 82. The failure recovery controller 82 performs failure recovery control of the processors 1 to 3, and can degrade the packaging units 1-1 to 1-n and can disconnect the processor 1 from the information processing system. The same operation as for the processor 1 is executed for the processors 2 and 3. The failure recovery controller 82 can perform read access of the status register 71 through the signal line 154, and logging of failure information.

With the above arrangement, when an error occurs in a clock signal supplied from the clock distributor 5 to the processors 1 to 3 through the clock signal lines 111 to 113, 121 to 123, and 131 to 133, the clock failure detectors 61 to 63 detect it, and supply a message indicating it to the interrupt signal generator 7 through the signal lines 141 to 143. Upon reception of the message, the interrupt signal generator 7 generates an interrupt signal to interrupt the diagnosis processor 8 through the signal line 161. The interrupt processing controller 81 of the diagnosis processor 8 reads the status register 71 to recognize a processor in which a clock failure occurs. The controller 81 then instructs the failure recovery processor 82 to start a failure recovery program. The failure recovery controller 82 executes the failure recovery program, thereby performing clock failure recovery processing.

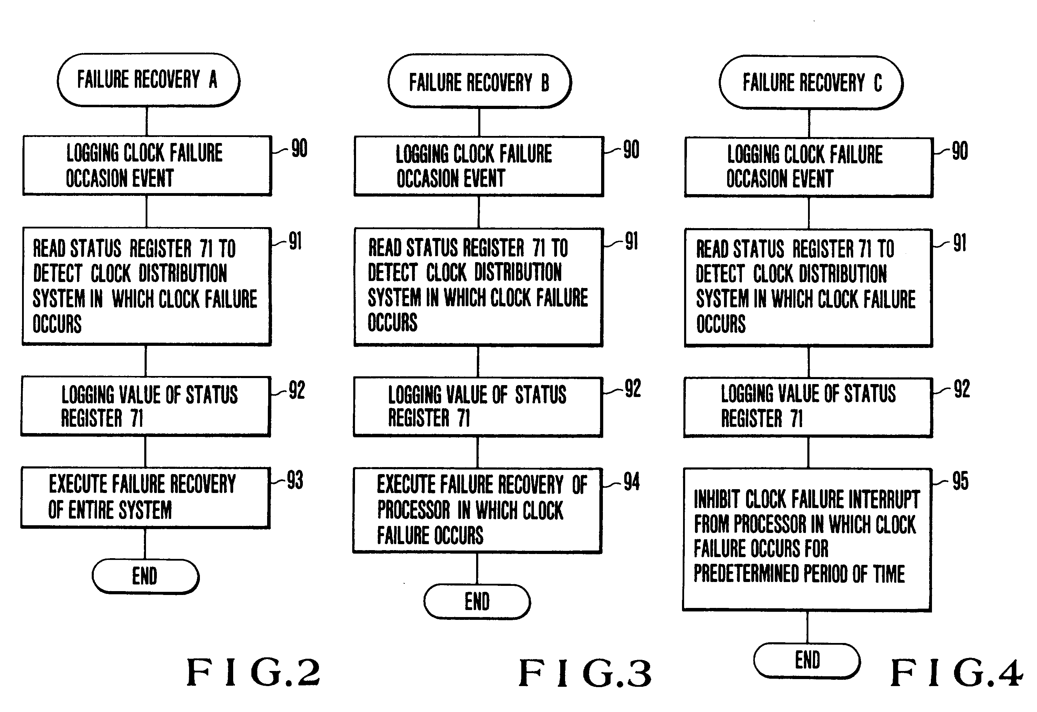

Figs. 2 to 4 are flow charts showing the failure recovery programs.

In a failure recovery program (failure recovery A) shown in Fig. 2, a clock failure event is logged in step 90. In step 91, the status register 71 is read to recognize a clock distribution system in which a clock failure occurs. In step 92, the content of the status register 71 is logged. Finally, in step 93, failure recovery of the entire information processing system is executed.

In a failure recovery program (failure recovery B) shown in Fig. 3, after steps 90, 91, and 92 are executed similarly, failure recovery of only a processor in which a clock failure occurs is performed.

In a failure recovery program (failure recovery C) shown in Fig. 4, after steps 90, 91, and 92 are executed similarly, the interrupt from a processor in which a clock failure occurs is inhibited for a predetermined period of time.

As described above, when a clock failure occurs in the information processing system of the present invention, occurrence of a clock failure is correctly recognized, proper failure recovery processing is executed, and a clock failure event and its location are logged, thereby presenting effective data for failure factor analysis.

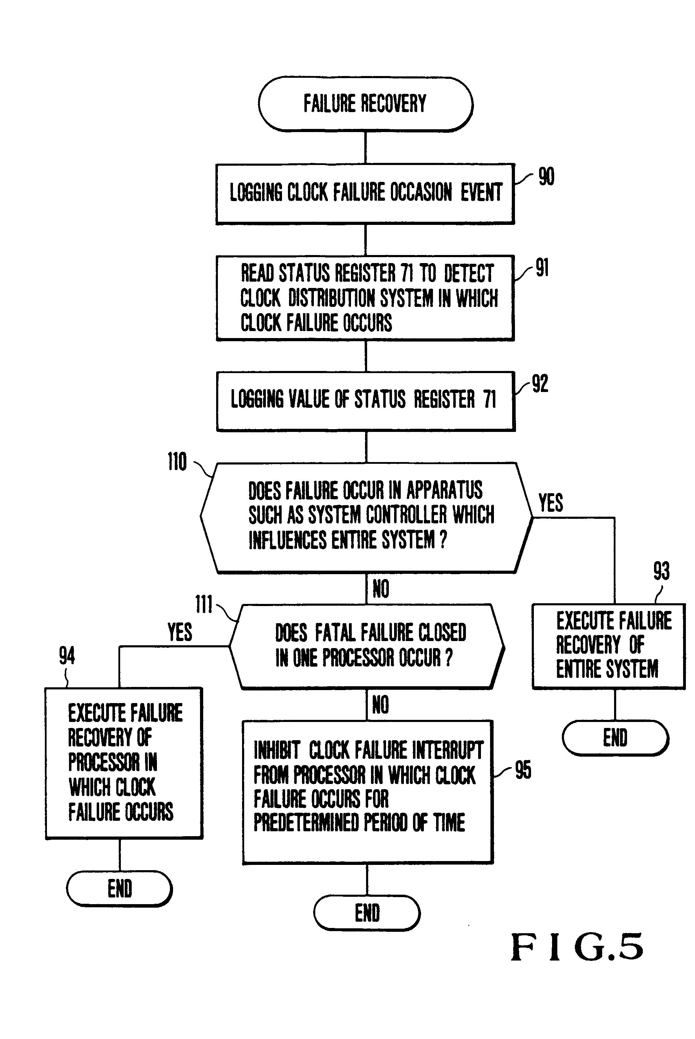

The failure recovery processing operations described above are executed as one flow chart shown in Fig. 5. In Fig. 5, the same step numbers designate the same processing steps as in the flow charts in Figs. 2 to 4. Steps 90 to 92 are similarly executed for any failure recovery. After step 92 is executed, the flow advances to step 110 to check if a failure occurs in a processor such as a system controller which influences the entire system. If YES in step 110, the flow advances to step 93 to execute the failure recovery A, so that failure recovery processing of the entire system is executed. If it is determined in step 110 that the failure occurs not in a processor such as a system controller which influences the entire system, the flow advances to step 111. In step 111, it is checked whether or not the failure is a fatal one which is closed in one processor, in other words, whether or not the failure can be recovered as a fatal failure in the processor of interest. If YES in step 111, the failure recovery B is executed, so that failure recovery processing of a processor in which a clock failure occurs is executed. If it is determined in step 111 that the failure is not a fatal failure which is closed in one processor, e.g., an error of a display, the flow advances to step 95 to execute the failure recovery C. Thus, a failure interrupt from a processor in which a clock failure occurs is inhibited for a predetermined period of time. When such a failure frequently occurs, maintenance is performed in step 95 to cope with this failure.

In this case, one of steps 93, 94, and 95 to be executed is determined depending on conditions of clock failures. The conditions of clock failures are that (1) a line is disconnected and no signal is input, (2) a clock cycle is disordered, (3) an object to be controlled falls outside a control range despite PLL control, and so on. If such a condition influences only one processor, processing in step 94 or 95 is executed, and when a condition is related to the entire system, processing in step 93 is executed.

As described above, according to the present invention, a clock error is detected by a clock failure detector, and a clock failure event and a location of the clock failure are logged by a failure recovery program, thus discriminating a clock failure or a logic portion failure. Therefore, a time required for analyzing a failure factor can be shortened.

## Claims

1. A clock failure recovery system in an information processing system including a plurality of processors (1 to 3) and a diagnosis processor (8) which can independently execute failure recovery for said plurality of processors (1 to 3), said clock failure recovery system char acterised in that it comprises:
a clock distributor (5) for generating one or a plurality of clock signals used in said information processing system and distributing the clock signals to said processors;
clock failure detectors (61 to 63) for monitoring the clock signal output from said clock distributor (5) and for, when an error occurs, generating an error signal in units of corresponding processors; and
interrupt generating means (7), having error signal holding means (71) for holding the error signal, for interrupting said diagnosis processor (8) in response to the error signal,
wherein execution start of a failure recovery program for recognizing a processor in which a clock failure occurs and executing logging of a clock failure event and a clock failure state is controlled in an interrupt processing program of said diagnosis processor (8), which is started upon interrupt.

## Patentansprüche

1. Taktausfallbeseitigungssystem in einem Informationsverarbeitungssystem mit mehreren Prozessoren (1 bis 3) und einem Diagnoseprozessor (8), das unabhängig die Ausfallbeseitigung für die mehreren Prozessoren (1 bis 3) ausführen kann, wobei das Taktausfallbeseitigungssystem dadurch gekennzeichnet ist, daß es aufweist:
einen Taktverteiler (5) zum Erzeugen eines oder mehrerer in dem Informationsverarbeitungssystem verwendeter Taktsignale und Verteilen der Taktsignale zu den Prozessoren;
Taktausfalldetektoren (61 bis 63) zum Überwachen der Taktsignalausgabe von dem Taktverteiler (5) und zum Erzeugen eines Fehlersignals in Einheiten von entsprechenden Prozessoren, wenn ein Fehler auftritt; und
eine Unterbrechungserzeugungseinrichtung (7) mit einer Fehlersignalhalteeinrichtung (71) zum Halten des Fehlersignals zum Unterbrechen des Diagnoseprozessors (8) als Reaktion auf das Fehlersignal,
wobei der Ausführungsbeginn eines Ausfallbeseitigungsprogramms zum Erkennen eines Prozessors, in dem ein Taktausfall auftritt, und Ausführen der Protokollierung eines Taktausfallereignisses und eines Taktausfallzustands in einem Unterbrechungsverarbeitungsprogramm des Diagnoseprozessors (8) gesteuert wird, das bei Unterbrechung gestartet wird.

## Revendications

1. Système de rétablissement de défaillance d'horloge dans un système de traitement d'informations incluant une pluralité de processeurs (1 à 3) et un processeur de diagnostic (8) qui peut exécuter indépendamment un rétablissement de défaillance pour ladite pluralité des processeurs (1 à 3), ledit système de rétablissement de défaillance d'horloge étant caractérisé en ce qu'il comprend :
un distributeur de signaux d'horloge (5) pour engendrer un ou une pluralité de signaux d'horloge utilisés dans ledit système de traitement d'informations et distribuer les signaux d'horloge auxdits processeurs ;
des détecteurs de défaillance d'horloge (61 à 63) pour contrôler le signal d'horloge en sortie dudit distributeur de signaux d'horloge (5) et pour engendrer un signal d'erreur, quand une erreur se produit, dans des unités des processeurs correspondants ; et,
un moyen de génération d'interruption (7), comportant un moyen de maintien de signal d'erreur (71) pour maintenir le signal d'erreur, pour interrompre ledit processeur de diagnostic (8) en réponse au signal d'erreur,
dans lequel le lancement de l'exécution d'un programme de rétablissement de défaillance pour identifier un processeur dans lequel se produit une défaillance d'horloge et exécuter l'enregistrement d'un événement de défaillance d'horloge et d'un état de défaillance d'horloge est commandé dans un programme de traitement d'interruption dudit processeur de diagnostic (8), qui est lancé lors d'une interruption.
